# EUROPÄISCHE PATENTSCHRIFT

(11) **EP 3 058 428 B1**
(45) Veröffentlichungstag und Bekanntmachung des Hinweises auf die Patenterteilung: **28.06.2023**
(21) Anmeldenummer: 14790535.0
(22) Anmeldetag: 14.10.2014
(51) Int. Cl.: G05B 19/418

(54) **MOBILE ANLAGENSTEUERUNG**
MOBILE SYSTEM CONTROLLER
COMMANDE MOBILE D'INSTALLATIONS

(30) Priorität: 14.10.2013 DE 102013111334
(43) Veröffentlichungstag der Anmeldung: 24.08.2016
(60) Teilanmeldung: 20211420.3
(73) Patentinhaber: WITRON Logistik + Informatik GmbH, 92711 Parkstein (DE)
(72) Erfinder: DUNZER, Matthias, 92676 Eschenbach (DE); MEISL, Michael, 95643 Tirschenreuth (DE)
(74) Vertreter: Betten & Resch
(86) Internationale Anmeldenummer: PCT/EP2014/072040
(87) Internationale Veröffentlichungsnummer: WO 2015/055668

(56) Entgegenhaltungen:
- EP-A1- 1 736 843
- DE-A1-102004 057 005
- DE-A1-102011 085 439
- DE-A1-102012 102 506
- DE-T5-112010 005 812

## Beschreibung

### HINTERGRUND DER ERFINDUNG

### GEBIET DER ERFINDUNG

Die vorliegende Erfindung betrifft eine Anlagensteuerung bzw. ein Verfahren zur mobilen Anlagensteuerung mit mindestens einem mobilen Ein- und/oder Ausgabegerät.

### STAND DER TECHNIK

In der Industrie werden viele automatisierte Anlagen betrieben, die durch eine Anlagensteuerung, beispielsweise in Form einer speicherprogrammierbaren Steuerung (progammable logic controller PLC), gesteuert werden. Üblicherweise weist eine derartige Steuerung mindestens ein Ein- und/oder Ausgabegerät auf, um für den Bediener der Anlage Informationen über den Status der Anlage bereitzustellen und die Eingabe von Befehlen zur Steuerung der Anlage zu ermöglichen

Bei größeren Anlagen, die sich über große Bereiche erstrecken, kann es erforderlich sein, lokale Möglichkeiten zur Ausgabe von Informationen und/oder zur Eingabe von Befehlen für die Steuerung der Anlage oder von Anlagebereichen zu schaffen, da nur eine einzige, zentrale Steuerung keine ausreichend schnelle und flexible Überwachung für den Bediener ermöglicht. Entsprechend kann es auch sinnvoll sein, die Steuerung hierarchisch mit Untersteuerungseinrichtungen für Teilbereiche der Anlage auszustatten, um die Komplexität der Steuerung zu verringern.

Entsprechend werden bei bekannten Anlagensteuerungen Ein- und/oder Ausgabegeräte dezentral in Teilbereichen der Anlage (Anlagenbereiche) oder bei einzelnen Anlagenkomponenten vorgesehen, die eine lokale Information über den Status des entsprechenden Anlagenbereichs oder der Anlagenkomponente und/oder eine Befehlseingabe für den Anlagenbereich oder die einzelne Anlagenkomponente ermöglichen.

Allerdings ist das Vorsehen von entsprechend lokal zugeordneten Ein- und/oder Ausgabegeräten bzw. von zusätzlichen Untersteuerungseinrichtungen durch die Bereitstellung der zusätzlich notwendigen Geräte sehr aufwändig und aufgrund der festen Zuordnung der Ein- und/oder Ausgabegeräte zu den zugehörigen Anlagenbereiche oder Anlagenkomponenten unter Umständen wenig flexibel.

Um den Aufwand für lokale Ein- und/oder Ausgabegeräte zu reduzieren, ist es denkbar, mobile Ein- und/oder Ausgabegeräte vorzusehen, die ein Bediener der Anlage beispielsweise mit sich führen kann, um an jedem beliebigen Ort Informationen über den Status der Anlage abzurufen und/oder Befehlseingaben vorzunehmen. Allerdings besteht hierbei das Problem, dass es durch Fehlzuordnung zu falschen Anlagenbereichen zu Fehlbedienungen kommen kann.

Die DE 10 2011 085439 A1 beschreibt ein Verfahren zum Einlesen eines zweidimensionalen Mustercodes einer Anlagenkomponente mittels einer Aufnahmevorrichtung eines mobilen Geräts und zur Darstellung und Verwendung von Daten mittels einer Ausgabevorrichtung dieses Geräts mit den folgenden Schritte: Einlesen und Decodieren des Codes, um Daten zu erhalten, die durch den Code gegeben sind und in Bezug zu der Komponente stehen, an der der Code angeordnet ist, Darstellen der Daten oder Anpassen der Daten entsprechend von Nutzerdaten und/oder dem mobilen Gerät und Darstellen der angepassten Daten, wobei die (angepassten) Daten interaktiv oder nicht-interaktiv sein können.

Die DE 11 2010 005812 T5 beschreibt ein Verfahren und ein System zur Steuerung und Fernüberwachung des Zustands von technischer Ausrüstung oder Anlagen, die alle mit Transpondern oder Etiketten als einem elektronischen Identifikator versehen sind. Der Benutzer identifiziert die Vorrichtung oder Maschine, während er sich vor Ort befindet. Die eindeutige ID, gespeicherte Daten auf dem Transponder und eventuell auch Sensordaten werden gelesen. Eine Mobilgeräte-Anwendung sendet eine Steuerungsanforderung von einer identifizierten Vorrichtung an das Automationssystem zur Genehmigung.Die Anforderung und die Daten werden durch das zentrale Automationssystem auf die folgenden Merkmale hin analysiert, ob die Steuerungsanforderung erlaubt oder genehmigt, so dass keine Fehloperation möglich ist. Wenn die Steuerung erlaubt ist, so werden die Befehle bezüglich der angeforderten Konfiguration, Aktion und dergleichen an das zentrale Automations- oder Steuerungssystem gesendet, das die Befehle steuert oder weiterleitet, wodurch die Befehle für die Vorrichtung oder Maschine ausgeführt werden.

### OFFENBARUNG DER ERFINDUNG

### AUFGABE DER ERFINDUNG

Es ist deshalb Aufgabe der vorliegenden Erfindung eine Anlagensteuerung bzw. ein Verfahren zur Anlagensteuerung bereitzustellen, bei welchem mobile Ein- und/oder Ausgabegeräte zur Anzeige von Anlageninformationen und/oder Eingabe von Steuerungsbefehlen Verwendung finden, wobei gleichzeitig sichergestellt wird, dass Verwechslungen und somit Falscheingaben durch falsche Zuordnung zu Anlagenbereichen oder Anlagenkomponenten vermieden werden. Gleichzeitig soll eine entsprechende Anlagensteuerung einfach aufgebaut und die Bedienung ebenfalls einfach sein.

### TECHNISCHE LÖSUNG

Diese Aufgabe wird gelöst durch eine Anlagensteuerung mit den Merkmalen des Anspruchs 1 sowie ein Verfahren zur mobilen Anlagensteuerung mit den Merkmalen des Anspruchs 7.

Vorteilhafte Ausgestaltungen sind Gegenstand der abhängigen Ansprüche.

Die Erfindung schlägt vor mehrere Identifizierungs- und Lokalisierungseinrichtungen in der Anlagensteuerung zu integrieren, welche mit dem oder den mobilen Ein- und/oder Ausgabegeräten zusammenzuwirken, um die Position des mobilen Ein- und/oder Ausgabegeräts an der Anlage zu lokalisieren und den zugehörigen Anlagenbereich zu identifizieren.

Durch eine Identifizierungs- und Lokalisierungseinrichtung ist es möglich, Identifizierungs- und Lokalisierungsinformationen bereitzustellen, die von dem mobilen Ein- und/oder Ausgabegerät erfasst und somit in der Anlagensteuerung verarbeitet werden können, sodass sichergestellt werden kann, dass die richtige Information über den entsprechenden Anlagebereich über das mobile Ausgabegerät bereitgestellt wird und/oder Befehlseingaben über das mobile Eingabegerät nur für den identifizierten Anlagenbereich möglich sind. Auf diese Weise lassen sich Fehlinformationen und/oder Fehlbedienungen in einfacher Weise sicher ausschließen, wobei gleichzeitig eine flexible und mobile Bedienung der Anlage möglich ist.

Die mehreren Identifizierungs - und Lokalisierungseinrichtungen umfassen mindestens zwei unterschiedliche Arten von Identifizierungs - und Lokalisierungseinrichtungen, wobei jede Art von Identifizierungs - und Lokalisierungseinrichtung eine unterschiedliche Funktion des mobilen Ein- und/oder Ausgabegeräts bewirkt. Eine erste Art von Identifizierungs - und Lokalisierungseinrichtung kann einen Operating Point darstellen, bei dem das mobile Ein- und/oder Ausgabegerät eine Eingabe von Steuerungsbefehlen ermöglicht, und. eine zweite Art von Identifizierungs - und Lokalisierungseinrichtung kann einen Trigger Point darstellen, bei dem das mobile Ein- und/oder Ausgabegerät eine Informationseingabeermöglicht.

Die Eingabe von Steuerungsbefehlen am Operating Point umfasst alle möglichen Steuerungsbefehle für den entsprechend gewählten Anlagenbereich, insbesondere auch einen zeitlich unbegrenzten Austausch von Daten, Befehlen und Informationen mit der entsprechenden Steuereungseinrichtung, solange die Anordnung des mobilen Ein- und/oder Ausgabegeräts im entsprechenden Anlagenbereich sichergestellt ist. Durch Positionierung der Identifizierungs - und Lokalisierungseinrichtung in der Nähe eines fest montierten Notausschalters oder integriert in die der Identifizierungs - und Lokalisierungseinrichtung kann ein sicherer Betrieb gewährleistet werden.

Die Informationseingabe am Trigger Point kann eine Freigabeinformation, wie beispielsweise ein Quittiersignal sein, dass z.B. eine Störung wie beispielsweise ein Verklemmen eines zu transportierenden Gutes auf einer Förderanlage behoben ist. Da die Information für den weiteren Betriebsablauf genutzt wird, stellt die Informationseingabe einen einmaligen bzw. zeitlich begrenzten Steuerungsbefehl dar, wobei jedoch kein weitergehender Datenaustausch erfolgt.

Die Lokalisierungs- und Identifizierungsinformation kann von der Identifizierungs- und Lokalisierungseinrichtung über ein Identifizierungssignal an das mobile Ein- und/oder Ausgabegerät ausgegeben werden, wobei das Identifizierungssignal durch sehr viele unterschiedliche Techniken realisiert werden kann. So kann die Identifizierungs- und Lokalisierungseinrichtung ein Funketikett, ein Nahfeldkommunikationsgerät, ein Strichcode oder ein zweidimensionaler Code sein, wobei beispielsweise bei einem Funketikett das Identifizierungssignal eine von mobilen Ein- und/oder Ausgabegerät lesbare Veränderung eines Aktivierungssignals durch das Funketikett sein kann. Bei einem Strichcode oder zweidimensionalen Code kann das Identifizierungssignal durch die Aussendung des entsprechenden Lichtmusters gegeben sein, welches von dem Ein- und/oder Ausgabegerät gelesen werden kann, z.B. mit Hilfe einer Kamera.

Das Identifizierungssignal von der Identifizierungs- und Lokalisierungseinrichtung kann durch das mobile Ein- und/oder Ausgabegerät ausgewertet werden, um dann die entsprechende Identifizierungs- und Lokalisierungsinformation an eine Steuerungseinrichtung der Anlagensteuerung zu übertragen. Damit kann direkt eine Ein-/Ausgabe von Steuerungsbefehlen bzw. -informationen bezüglich einer lokal begrenzten Steuerungseinrichtung, die durch die Identifizierungs- und Lokalisierungseinrichtung identifiziert worden ist, beispielsweise einer oder mehrerer Anlagenkomponenten, mit dem mobilen Ein- und/oder Ausgabegerät realisiert werden, da das mobile Ein- und/oder Ausgabegerät mit der entsprechenden Identifizierungs- und Lokalisierungsinformation direkt Verbindung mit der zugehörigen Steuerungseinrichtung aufnehmen kann. Damit kann eine effektive dezentrale Steuerung einer Anlage realisiert werden. Entsprechend kann die Steuerungseinrichtung eine zentrale Steuerungseinrichtung zur Steuerung der gesamten Anlage und deren Komponenten und/oder eine Untersteuerungseinrichtung zur Steuerung eines Anlagenbereichs und/oder dessen Komponenten sein, wobei das mobile Ein- und/oder Ausgabegerät Signale von der zentralen Steuerungseinrichtung und/oder der Untersteuerungseinrichtung empfangen und/oder zur zentralen Steuerungseinrichtung und/oder Untersteuerungseinrichtung senden kann.

Alternativ kann das Identifizierungssignal unverarbeitet von dem mobilen Ein- und/oder Ausgabegerät an eine zentrale oder beliebige Steuerungseinrichtung der Anlagensteuerung übermittelt werden, sodass durch die Steuerungseinrichtung die Lokalisierungs- und Identifizierungsinformation generiert werden kann.

Mit der Identifizierungs- und Lokalisierungsinformation kann die Steuerungseinrichtung die Position des mobilen Ein- und/oder Ausgabegeräts erfassen und den entsprechenden Anlagenbereich identifizieren. Auf Basis des identifizierten Anlagenbereichs bzw. einer entsprechend zugeordnete Anlagenkomponente kann die Ein- und/oder Ausgabe des Ein- und/oder Ausgabegeräts freigegeben und/oder beschränkt werden. So kann beispielsweise die bei mobilen Ein- und/oder Ausgabegerät angezeigte Information über den Status der Anlage auf den von der erfassten Position aus einsehbaren Anlagenbereich beschränkt werden oder die Befehlseingabe kann lediglich für diesen Bereich freigegeben werden.

Durch das Zusammenwirken von mobilem Ein- und/oder Ausgabegerät und der entsprechenden Identifizierungs- und Lokalisierungseinrichtung bzw. durch Empfang des entsprechenden Identifizierungssignals kann auch automatisch die Kommunikation zwischen dem mobilen Ein- und/oder Ausgabegerät und der Steuerungseinrichtung der Anlagensteuerung gestartet werden, sodass die Bedienung der Anlage erheblich vereinfacht werden kann, da automatisch beispielsweise die Information über den Status des betreffenden Anlagebereichs angezeigt und/oder eine Eingabemöglichkeit für Steuerbefehle für den entsprechenden Anlagebereich bereitgestellt werden kann.

Um sicherzustellen, dass das mobile Ein- und/oder Ausgabegerät tatsächlich in dem entsprechenden Anlagenbereich der Anlage positioniert ist, kann während der Ein- und/oder Ausgabe mit dem mobilen Ein- und/oder Ausgabegerät ein ständiges Zusammenwirken mit der zugehörigen Identifizierungs- und Lokalisierungseinrichtung erforderlich sein, um permanent die Identifizierung und/oder Lokalisierung vorzunehmen, beispielsweise durch zyklisches bzw. immer wiederkehrendes Identifizieren und/oder Lokalisieren. Alternativ ist es auch möglich, dass das Zusammenwirken des mobilen Ein- und/oder Ausgabegeräts mit der Identifizierungs- und Lokalisierungseinrichtung auf einen bestimmten Zeitraum vor Beginn der Ein- und/oder Ausgabe beschränkt ist oder dass ein Zusammenwirken lediglich in bestimmten Zeitintervallen erforderlich ist.

Zusammen mit der Identifizierungs- und Lokalisierungseinrichtung kann ein von dem mobilen Ein- und/oder Ausgabegerät separater Notausschalter vorgesehen sein, der im Falle einer Fehleingabe oder bei Anzeige einer Fehlfunktion eine separate Abschaltung des Anlagenbereichs bzw. der Anlagekomponente oder der Gesamtanlage ermöglicht. Dadurch kann die Sicherheit des Anlagenbetriebs weiter erhöht werden. Durch die Anordnung eines separaten Notausschalters integriert in der Identifizierungs- und Lokalisierungseinrichtung oder in der Nähe der Identifizierungs- und Lokalisierungseinrichtung, insbesondere in unmittelbarer Nähe zum mobilen Ein- und/oder Ausgabegerät, welches so relativ zur Identifizierungs- und Lokalisierungseinrichtung angeordnet ist, dass ein ständiges Zusammenwirken von Identifizierungs- und Lokalisierungseinrichtung und mobilem Ein- und/oder Ausgabegerät zur Sicherstellung der örtlichen Präsenz möglich ist, wird die Sicherheit des Anlagenbetriebs deutlich erhöht, da unabhängig von der Steuerung durch das mobile Ein- und/oder Ausgabegerät eine separate Notausschaltung jederzeit möglich ist. Es wird nämlich sichergestellt, dass gleichzeitig mit der Bedienung der Anlage oder eines Anlagenbereichs durch das mobile Ein- und/oder Ausgabegerät eine separate und unabhängige Notausschaltung möglich ist.

Bei einer drahtlosen Signalübertragung zwischen mobilem Ein- und/oder Ausgabegerät und der Steuerungseinrichtung kann ein drahtloses lokales Netzwerk (Wireless Local Area Network WLAN) eingesetzt werden. Auch andere drahtlose Signalübertragungen sind denkbar. Allerdings ist die drahtlose Signalübertragung zwischen mobilem Ein- und/oder Ausgabegerät und einer Steuerungseinrichtung separat und unabhängig von dem Zusammenwirken des mobilen Ein- und/oder Ausgabegeräts mit einer Identifizierungs- und Lokalisierungseinrichtung.

Als mobiles Ein- und/oder Ausgabegerät kann ein berührungsempfindlicher Bildschirm, ein Mobiltelefon, ein Smartphone, ein persönlicher, digitaler Assistent, ein Tablet - Computer oder dergleichen eingesetzt werden. Wesentlich ist lediglich, dass das mobile Ein- und/oder Ausgabegerät je nach dem gewünschten Funktionsumfang die entsprechenden Ein- und/oder Ausgaben ermöglicht und das Identifizierungssignal der Identifizierungs- und Lokalisierungseinrichtung erfassen sowie drahtlos an die Steuerungseinrichtung weiterleiten kann.

### KURZBESCHREIBUNG DER FIGUREN

Die beigefügten Zeichnungen zeigen in schematischer Weise in
- Fig. 1: eine Übersicht über eine erfindungsgemäße Anlagensteuerung,
- Fig. 2: eine Detailansicht eines Teils einer erfindungsgemäßen Anlagensteuerung gemäß einem weiteren Ausführungsbeispiel,
- Fig. 3: eine vergrößerte Darstellung eines Details der Anlagensteuerung aus Figur 1, und in
- Fig. 4: eine vergrößerte Darstellung eines Details aus Figur 3.

### AUSFÜHRUNGSBEISPIELE

Weitere Vorteile, Kennzeichen und Merkmale der vorliegenden Erfindung werden bei der nachfolgenden Beschreibung der Ausführungsbeispiele deutlich. Allerdings ist die Erfindung nicht auf diese Beispiele beschränkt.

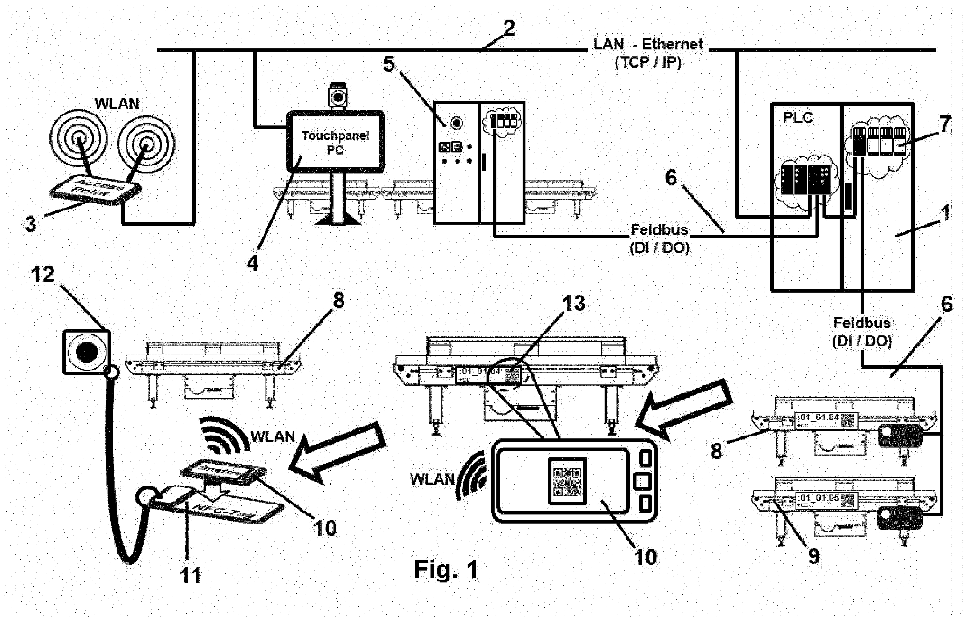

Die Figur 1 zeigt eine Systemübersicht einer erfindungsgemäßen Anlagensteuerung mit einer Steuerungseinrichtung 1 in Form einer speicherprogrammierbaren Steuerung (Programmable Logic Contoller PLC). Die Steuerungseinrichtung 1 ist über ein Feldbussystem 7 mit entsprechenden Busleitungen 6 mit Komponenten einer Förderanlage verbunden. Die Förderanlage umfasst beispielsweise Rollenförderer 8, 9 die zum Transport von Paletten oder dergleichen dienen. Die hier genannten Rollenförderer 8, 9 stellen jedoch nur ein Beispiel dar, sodass die Anwendung der Erfindung nicht auf diese Anlagenkomponenten oder Anlagenart beschränkt ist. Vielmehr lassen sich mit der Erfindung unterschiedlichste Anlagen steuern, unter anderem insbesondere Logistiksysteme und Förderanlagen, als auch verschiedenste Komponenten von derartigen Anlagen, wie beispielsweise Bandförderer, Querförderer, Hubanlagen, Regalbediengeräte und dergleichen, für die die Erfindung besonders vorteilhaft ist, so dass die Anwendung der Erfindung auf Logistiksysteme und Handhabungssysteme ebenfalls Gegenstand der vorliegenden Anmeldung ist.

Über weitere Busleitungen 6 des Feldbussystems 7 kann die Steuerungseinrichtung 1 weiterhin mit Untersteuerungseinrichtungen 5 verbunden sein, welche Bereiche einer entsprechenden Anlage, wie beispielsweise einen Teil der Förderanlage, oder einzelne Komponenten der Anlage steuern. Über die Busleitung 6 des Feldbussystems 7 kann die Steuerungseinrichtung 1 mit der Untersteuerungseinrichtung 5 kommunizieren und entsprechende Daten austauschen.

In einem entsprechenden Anlagenbereich mit mehreren Komponenten einer Anlage oder bei einer einzelnen Komponente kann eine sogenannte Diagnose- und Bedien-Station (Diagnose Operating Station DOST) in Form eines Touchpanel - PCs 4 vorgesehen sein, welche über ein lokales Bereichsnetzwerk (local area network LAN) in Form eines LAN - Ethernet (TCP/IP) mit der Steuerungseinrichtung 1 verbunden ist. Entsprechend kann über den Touchpanel - PC 4 ein bestimmter Anlagenbereich mit mehreren Komponenten der Anlage oder einer einzigen Anlagenkomponente überwacht und/oder gesteuert werden. Zur Überwachung werden auf dem Touchpanel - PC 4 in einem entsprechenden Anzeigefeld die relevanten Informationen über den Anlagenbereich dargestellt, sodass ein Bediener über den Status des Anlagenbereichs informiert ist. Darüber hinaus kann durch Eingaben auf dem Touchpanel - PC 4 eine Steuerung des Anlagenbereichs mit Veränderung entsprechender Parameter des Anlagenbereichs vorgenommen werden. Über den Touchpanel - PC 4 kann sich somit ein Bediener Informationen über den Status eines Anlagenbereichs oder der Gesamtanlage verschaffen und zugleich durch Eingabe von entsprechenden Befehlen eine Steuerung der Gesamtanlage oder des Anlagenbereichs vornehmen, sodass über das Feldbussystem 7 beispielsweise die Förderkomponenten in Form der Rollenförderer 8,9 entsprechend gesteuert werden.

Über das lokale Bereichsnetzwerk 2 (LAN - Ethernet (TCP/IP)) ist mit der Steuerungseinrichtung 1 weiterhin ein WLAN - Router 3 verbunden, der einen sogenannten Wireless Access Point (Zugriffspunkt eines drahtlosen Netzwerkes bzw. lokalen Funknetzes) eines drahtlosen lokalen Bereichsnetzwerks (Wireless local area network WLAN) bzw. eines lokalen Funknetzes bereitstellt. Über den Wireless Access Point bzw. den WLAN - Router 3 können mobile Ein- und/oder Ausgabegeräte, wie beispielsweise ein Smartphone 10, mit der Steuerungseinrichtung kommunizieren, sodass auf dem Smartphone 10 Informationen über den Status der Gesamtanlage oder eines Anlagenbereichs angezeigt und Befehlseingaben ausgeführt werden können. Hierzu muss lediglich eine Verbindung über den WLAN - Router 3 mit der Steuerungseinrichtung 1 hergestellt werden.

Um sicherzustellen, dass das mobile Ein- und/oder Ausgabegerät in Form des Smartphones 10 in einem bestimmten Anlagenbereich mit einem oder mehreren Anlagenkomponenten bzw. im Bereich einer bestimmten Anlagenkomponente angeordnet ist, um genaue Informationen über diesen Anlagenbereich oder eine einzelne Anlagenkomponente zu erhalten oder Befehle zur Steuerung des entsprechenden Anlagenbereichs oder der Anlagenkomponente einzugeben, wird vor und/oder während der Ein- und/oder Ausgabe über das Smartphone 10 eine Lokalisierung und Identifizierung über eine Identifizierungs- und Lokalisierungseinrichtung 11, 13 durchgeführt.

In der Systemübersicht der Figur 1 sind zwei verschiedene Identifizierungs- und Lokalisierungseinrichtungen 11, 13 gezeigt, die in einer entsprechenden Anlagensteuerung eingesetzt werden können und nachfolgend näher beschrieben werden.

In der Figur 1 ist ein sogenannter NFC - Tag 11 (Near Field Communication - Tag, ein Nahfeldkommunikationsetikett), beispielsweise in Form eines Funketiketts oder eines RFID - Tags (RFID radio frequency identification, Funkfrequenz - Identifizierungsetikett) gezeigt. Das Smartphone 10 wird in den Wirkungsbereich des Funketiketts 11 gebracht, beispielsweise durch Auflegen auf das Funketikett, sodass das Smartphone 10 als Lesegerät funktioniert und die Identifizierungs- und Lokalisierungsinformationen des Funketiketts 11 lesen kann. Durch das Lesen der Identifizierungs- und Lokalisierungsinformation des Funketiketts 11 kann in dem Smartphone 10 ein Verbindungsmodus mit der Steuerungseinrichtung 1 gestartet werden, sodass Ein- und/oder Ausgaben über das Smartphone 10 für die Steuerungseinrichtung 1 möglich sind. Das Lesen der Identifizierungs- und Lokalisierungsinformationen des Funketiketts 11 kann somit die Verbindung mit der Steuerungseinrichtung 1 initiieren. Allerdings ist es auch möglich, dass sich das Smartphone 10 bereits in einem Verbindungsmodus mit der Steuerungseinrichtung 1 befindet und die von dem Funketikett 11 erhaltene Identifizierungs- und Lokalisierungsinformation lediglich zusätzlich aufgenommen wird.

Mit der Lokalisierungs- und Identifizierungsinformation des Funketiketts 11, welche unmittelbar ohne weitere Verarbeitung von dem Smartphone 10 an die Steuerungseinrichtung 1 über den WLAN - Router 3 übermittelt werden kann, bzw. durch die Übermittlung einer entsprechenden Information nach Auswertung des Lokalisierungs- und Identifizierungsinformation des Funketiketts 11 an die Steuerungseinrichtung 1, kann das Smartphone 10 unmittelbar die Statusinformation für die Anlagenkomponente 8 bzw. den Anlagenbereich, der mit dem Funketikett 11 versehen ist, anzeigen, welche von der Steuerungseinrichtung 1 übermittelt worden ist. Alternativ oder zusätzlich kann das Smartphone 10 in einen Eingabemodus versetzt werden, der die Eingabe von Steuerungsbefehlen für den entsprechenden Anlagenbereich oder die entsprechende Anlagenkomponente 8 ermöglicht.

Ein Bediener kann somit mit seinem Smartphone 10 in einem entsprechenden Anlagenbereich oder bei einer Anlagenkomponente 8 ein Funketikett11 kontaktieren, sodass die Lokalisierungs- und Identifizierungsinformation des Funketiketts 11 im Smartphone 10 verarbeitet bzw. direkt an die Steuerungseinrichtung 1 weitergeleitet werden kann, sodass das Smartphone 10 für die Bedienung des Anlagenbereichs bzw. der Anlagenkomponente 8 freigeschaltet wird. Dadurch kann der Bediener durch das Smartphone 10 Bedienungsbefehle für den entsprechenden Anlagenbereich bzw. die Anlagenkomponente 8 eingeben, welche durch die Steuerungseinrichtung 1 verarbeitet wird und die Steuerungseinrichtung 1 wird entsprechende Steuerungsbefehle über das Feldbussystem 7 an die entsprechende Anlagenkomponente 8 ausgeben. Damit kann über das mobile Ein- und/oder Ausgabegerät in Form des Smartphones 10 eine entsprechende Bedienung des mit dem Funketikett 11 verbundenen Anlagenbereichs vorgenommen werden. Durch die Lokalisierung und Identifizierung über das Funketikett 11 ist sichergestellt, dass sich der Bediener mit seinem Smartphone 10 im entsprechenden Anlagenbereich aufhält und sich einen Überblick über die tatsächlichen Verhältnisse im zugehörigen Anlagenbereich durch in Inaugenscheinnahme machen kann. Da über das Smartphone 10 entsprechende Eingaben zur Steuerung des Anlagenbereichs bzw. der entsprechenden Anlagenkomponente 8 durchgeführt werden können, ist das Funketikett 11 fest und unlösbar mit einem Notausschalter 12 verbunden, sodass im Falle einer Falscheingabe eine unmittelbare Notausschaltung erfolgen kann.

Durch das Vorsehen eines separaten Notausschalters 12 ist die Bedienebene von der Schutzebene getrennt, sodass eine hohe Sicherheit des Anlagenbetriebs gewährleistet ist.

Wird das Smartphone 10 lediglich als Anzeigegerät betrieben, so kann durch das Auslesen der Lokalisierungs- und Identifizierungsinformationen des Funketiketts 11 unmittelbar ohne weitere Eingabe die entsprechende Information des zugehörigen Anlagenbereichs bzw. der zugehörigen Anlagenkomponente 8 an dem Smartphone 10 angezeigt werden.

Eine weitere Möglichkeit einer Lokalisierungs- und Identifizierungsvorrichtung ist durch ein Strichcode - oder QR - Code - Etikett 13 (QR Quick Response; Schnellantwort - Code) gegeben. Ein derartiges QR - Code - Etikett 13 ist beispielsweise in einem bestimmten Anlagenbereich oder einer bestimmten Anlagenkomponente 9 angeordnet, sodass durch Einlesen der mit dem QR - Code verbundenen Lokalisierungs- und Identifizierungsinformation in das Smartphone 10 beispielsweise durch Fotografieren des QR - Codes ebenfalls eine Lokalisierung und Identifizierung des entsprechenden Anlagenbereichs oder der Anlagenkomponente 9 möglich ist.

Eine Identifizierungs- und Lokalisierungsvorrichtung in Form eines QR - Code - Etiketts 13 kann in gleicher Weise eingesetzt werden wie ein Funketikett 11, um das Smartphone 10 als Ein- und/oder Ausgabegerät für die Anlagensteuerung zu verwenden.

Bei der gezeigten Ausführungsform wird das QR - Code - Etikett 13 jedoch in anderer Funktion verwendet, und zwar nicht um einen sogenannten Operating Point (OP) wie mit dem Funketikett 11 in der zu steuernden Anlage zu schaffen, sondern einen sogenannten Trigger Point (TP). Der Unterschied besteht hierbei darin, dass beim Operating Point mit dem Smartphone 10 eine Befehlseingabe zur Steuerung des entsprechenden Anlagenbereichs oder der Anlagenkomponente 8 erfolgen kann, während am Trigger Point lediglich eine Quittierfunktion mit dem Smartphone 10 ausgeübt werden soll. Beispielsweise kann es an der Förderanlage im Beriech der Anlagenkomponente 9 zu einer Störung gekommen sein, weil beispielsweise ein zu förderndes Gut auf der Förderanlage sich verklemmt hat. Nachdem die Verklemmung des zu fördernden Gutes manuell beseitigt worden ist, kann der Bediener der Anlage über sein Smartphone 10 eine entsprechende Quittierinformation über die Störungsbeseitigung an die Steuerungseinrichtung 1 übermitteln. Zu diesem Zweck muss lediglich das QR - Code - Etikett 13 fotografiert werden und durch die im QR - Code enthaltene Lokalisierungs- und Identifizierungsinformation kann der Steuerungseinrichtung 1 bestätigt werden, dass die Störung beseitigt ist. Zu diesem Zweck kann das Smartphone 10 die Lokalisierungs- und Identifizierungsinformation des QR-Codes direkt ohne weitere Verarbeitung über die WLAN - Verbindung an die Steuerungseinrichtung 1 weiterleiten oder das Smartphone 10 kann nach interner Auswertung der Identifizierungs- und Lokalisierungsinformation die Information über die Anlagenkomponente 9 ebenfalls über das WLAN - Netz an die Steuerungseinrichtung 1 weiterleiten.

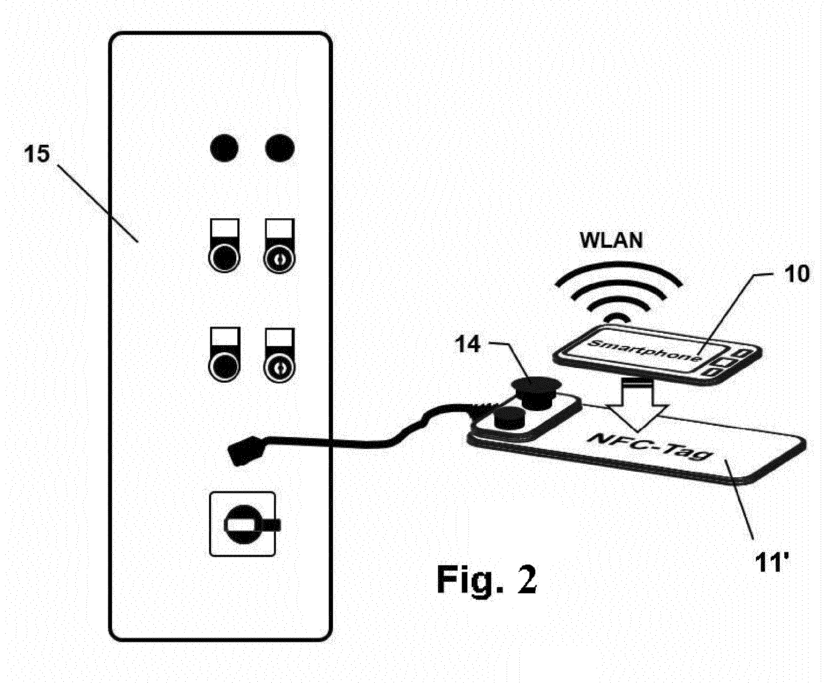

Die Figur 2 zeigt eine alternative Ausführungsform eines Funketiketts 11', bei dem ein Notausschalter 14 in das Funketikett 11' integriert ist, sodass kein weiterer separater Notausschalter 12 wie bei der Ausführungsform der Figur 1 im entsprechenden Anlagenbereich oder der Anlagenkomponente 8 vorzusehen ist. Das Funketikett 11 ' kann entsprechend an einem Bauteil 15 im entsprechenden Anlagenbereich oder der Anlagenkomponente 8 angeordnet sein, wobei eine unmittelbare Signalleitung zwischen dem Notausschalter 14 und den entsprechenden Komponenten des Anlagenbereichs vorgesehen wird, um die Notausschaltung zu ermöglichen.

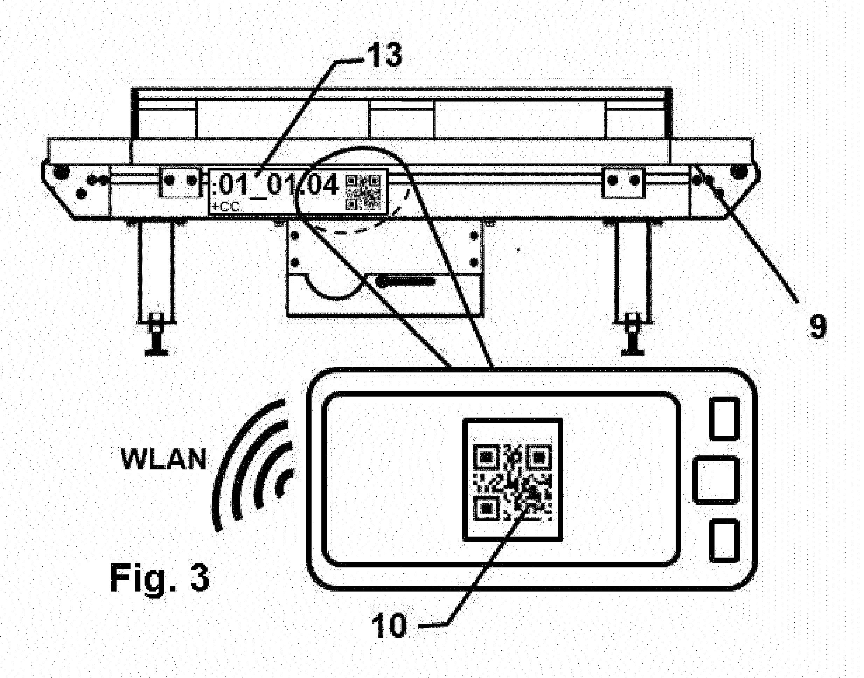

Die Figur 3 zeigt im größeren Detail das Zusammenwirken zwischen dem Smartphone 10 und der Anlagenkomponente 9, welche mit einem QR - Code - Etikett 13 als Identifizierungs- und Lokalisierungsvorrichtung versehen ist.

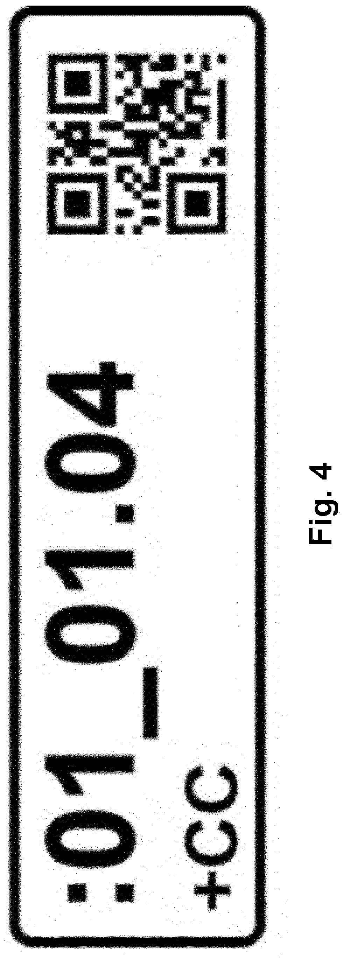

Wie sich zudem aus der Figur 4 mit der vergrößerten Darstellung des QR - Code - Etiketts 13 ergibt, kann das QR - Code - Etikett neben dem QR - Code mit der binären Lokalisierungs- und Identifizierungsinformation die entsprechende Lokalisierungs- und Identifizierungsinformation auch in anderer Form, beispielsweise einer normierten Darstellung zum Lesen durch den Bediener enthalten.

Obwohl die vorliegende Erfindung anhand der Ausführungsbeispiele detailliert beschrieben worden ist, ist für den Fachmann selbstverständlich, dass die Erfindung in der Weise abgeändert werden kann, dass einzelne Merkmale weggelassen oder andersartige Kombinationen von Merkmalen verwirklicht werden, solange der Schutzbereich der beigefügten Ansprüche nicht verlassen wird. Insbesondere umfasst die vorliegende Offenbarung sämtliche Kombinationen der vorgestellten Einzelmerkmale.

Bei der Darstellung der Ausführungsbeispiele ist das Funketikett 11 zur Verwendung an einem Operating Point beschrieben worden, während dass QR - Code - Etikett 13 zur Verwendung an einem Trigger Point dargestellt worden ist. Selbstverständlich kann jedoch auch ein Funketikett an einem Trigger Point oder ein QR - Code - Etikett an einem Operating Point eingesetzt werden. Zudem können anstatt eines QR - Code - Etiketts auch Strichcode - Etiketts oder andere zweidimensionale Codes eingesetzt werden. In gleicher Weise können statt dem Funketikett in Form eines RFID - Tags auch andere Nahfeldkommunikationsgeräte zum Einsatz kommen.

Die vorliegende Erfindung wurde anhand eines Ausführungsbeispiels im Bereich der Fördertechnik mit Komponenten wie Rollenförderer, Bandförderer und dergleichen beschrieben. Allerdings ist für den Fachmann leicht ersichtlich, dass die entsprechende Erfindung auch für die Steuerung anderer Anlagen oder Komponenten von Anlagen einsetzbar ist. Insbesondere ist die Erfindung für Logistiksysteme, Handhabungs - und/oder Lagersysteme, beispielsweise im Zusammenhang mit Kommissionieranlagen, mit ihren entsprechenden Komponenten, wie Förderanlagen, Regalbediengeräten, Palettisierungs - und Depalettisierungsanlagen und dergleichen einsetzbar.

## Patentansprüche

1. Anlagensteuerung, insbesondere zur Steuerung von Förderanlagen (8,9), mit mindestens einem mobilen Ein- und/oder Ausgabegerät (10) und mindestens einer Steuerungseinrichtung (1,5) zur Steuerung der Anlage und zum Empfang und/oder zur Abgabe von Signalen von und/oder zum mobilen Ein- und/oder Ausgabegerät, wobei eine Signalübertragungseinrichtung (2,3,6,7) zur Signalübertragung zwischen mobilem Ein- und/oder Ausgabegerät und Steuerungseinrichtung so eingerichtet ist, dass die Signalübertragung zumindest teilweise drahtlos erfolgt, wobei
die Anlagensteuerung mehrere Identifizierungs- und Lokalisierungseinrichtungen (11,13) umfasst, die so eingerichtet sind, dass sie mit dem mobilen Ein- und/oder Ausgabegerät zusammenwirken können, um die Position des mobilen Ein- und/oder Ausgabegeräts an der Anlage zu lokalisieren und den entsprechenden Anlagenbereich zu identifizieren,
**dadurch gekennzeichnet, dass** die mehreren Identifizierungs- und Lokalisierungseinrichtungen (11,13) mindestens zwei unterschiedliche Arten von Identifizierungs- und Lokalisierungseinrichtungen (11,13) umfassen, wobei jede Art von Identifizierungs- und Lokalisierungseinrichtung (11,13) eine unterschiedliche Funktion des mobilen Ein- und/oder Ausgabegeräts bewirkt,
wobei eine erste Art von Identifizierungs- und Lokalisierungseinrichtung (11) einen Operating Point darstellt, bei dem das mobile Ein- und/oder Ausgabegerät eine Eingabe von Steuerungs-befehlen ermöglicht, und eine zweite Art von Identifizierungs- und Lokalisierungseinrichtung (13) einen Trigger Point darstellt, bei dem das mobile Ein- und/oder Ausgabegerät eine Informationseingabe ermöglicht.

2. Anlagensteuerung nach Anspruch 1,
wobei die Identifizierungs- und Lokalisierungseinrichtung (11') einen Notausschalter umfasst oder ein Notausschalter in unmittelbarer Nähe zu der Identifizierungs- und Lokalisierungseinrichtung angeordnet ist.

3. Anlagensteuerung nach Anspruch 1 oder 2,
wobei das mobile Ein- und/oder Ausgabegerät (10) ein Berührungsbildschirm, ein Mobiltelefon, ein Smartphone, ein persönlicher, digitaler Assistent oder ein Tablet-Computer ist.

4. Anlagensteuerung nach Anspruch 1, 2 oder 3,
wobei die Signalübertragungseinrichtung (2,3,6,7) ein drahtloses lokales Netzwerk (3) umfasst.

5. Anlagensteuerung nach einem der vorhergehenden Ansprüche,
wobei die Identifizierungs- und Lokalisierungseinrichtung (11,13) ein Funketikett, ein Nahfeldkommunikationsgerät, ein Strichcode oder ein zweidimensionaler Code ist.

6. Anlagensteuerung nach einem der vorhergehenden Ansprüche,
wobei die Steuerungseinrichtung (1,5) eine zentrale Steuerungseinrichtung (1) zur Steuerung der gesamten Anlage und deren Komponenten und/oder eine Untersteuerungseinrichtung (5) zur Steuerung eines Anlagenbereichs und/oder dessen Komponenten ist, wobei insbesondere das mobile Ein- und/oder Ausgabegerät Signale von der zentralen Steuerungseinrichtung (1) und/oder Untersteuerungseinrichtung (5) empfangen und/oder zur zentralen Steuerungs-einrichtung (1) und/oder Untersteuerungseinrichtung (5) senden kann.

7. Verfahren zur mobilen Anlagensteuerung, insbesondere zur mobilen Steuerung von Förderanlagen (8,9), vorzugsweise zum Betrieb einer Anlagensteuerung nach einem der vorhergehenden Ansprüche, wobei mindestens ein mobiles Ein-und/oder Ausgabegerät (10) und mindestens eine Steuerungseinrichtung (1) zur Steuerung einer Anlage und zum Empfang und/oder zur Abgabe von Signalen von und/oder zum mobilen Ein- und/oder Ausgabegerät bereit gestellt werden, wobei eine Signalübertragung zwischen mobilem Ein- und/oder Ausgabegerät und Steuerungseinrichtung zumindest teilweise drahtlos erfolgt, wobei
weiterhin mehrere Identifizierungs- und Lokalisierungseinrichtungen (11,13) bereitgestellt werden, so dass sie mit dem mobilen Ein- und/oder Ausgabegerät zusammenwirken können, um die Position des mobilen Ein- und/oder Ausgabegeräts an der Anlage zu lokalisieren und den entsprechenden Anlagenbereich zu identifizieren,
**dadurch gekennzeichnet, dass** die mehreren Identifizierungs- und Lokalisierungseinrichtungen (11,13) mindestens zwei unterschiedliche Arten von Identifizierungs- und Lokalisierungseinrichtungen (11,13) umfassen, wobei jede Art von Identifizierungs- und Lokalisierungseinrichtung (11,13) eine unterschiedliche Funktion des mobilen Ein-und/oder Ausgabegeräts bewirkt,
wobei eine erste Art von Identifizierungs- und Lokalisierungseinrichtung (11) einen Operating Point darstellt, bei dem das mobile Ein- und/oder Ausgabegerät eine Eingabe von Steuerungs-befehlen ermöglicht, und eine zweite Art von Identifizierungs- und Lokalisierungseinrichtung (13) einen Trigger Point darstellt, bei dem das mobile Ein- und/oder Ausgabegerät eine Informationseingabe ermöglicht

8. Verfahren nach Anspruch 7,
wobei eine Notausschaltung derart vorgesehen ist, dass sie unabhängig von dem mobilen Ein- und/oder Ausgabegerät während der Bedienung der Anlage mit dem mobilen Ein- und/oder Ausgabegerät von dem Bediener des mobilen Ein- und/oder Ausgabegeräts vorgenommen werden kann.

9. Verfahren nach Anspruch 7 oder 8,
wobei das mobile Ein- und/oder Ausgabegerät ein Identifizierungssignal von der Identifizierungs- und Lokalisierungseinrichtung (11,13) erfasst und dieses ausgewertet oder unverarbeitet an die Steuerungseinrichtung übermittelt, so dass von der Steuerungseinrichtung die Position des mobilen Ein- und/oder Ausgabegeräts erfasst und/oder der entsprechende Anlagen-bereich identifiziert werden kann.

10. Verfahren nach Anspruch 7, 8 oder 9,
wobei in Abhängigkeit von dem identifizierten Anlagenbereich die Ein- und/oder Ausgabe des Ein- und/oder Ausgabegeräts freigegeben und/oder beschränkt wird.

11. Verfahren nach einem der Ansprüche 7 bis 10,
wobei durch das Zusammenwirken von mobilem Ein - und/oder Ausgabegerät und Identifizierungs- und Lokalisierungseinrichtung ein Schritt zum Start der Kommunikation zwischen mobilem Ein- und/oder Ausgabegerät und der Steuerungseinrichtung erfolgt.

12. Verfahren nach einem der Ansprüche 7 bis 11,
wobei das mobile Ein- und/oder Ausgabegerät nach Erhalt eines Identifizierungssignals von der Identifizierungs- und Lokalisierungseinrichtung (11,13) direkt mit einer Steuerungseinrichtung für den lokalen und identifizierten Anlagenbereich kommuniziert.

13. Verfahren nach einem der Ansprüche 7 bis 12,
wobei während der Ein- und/oder Ausgabe mit dem mobilen Ein- und/oder Ausgabegerät (10) ein ständiges Zusammenwirken des mobilen Ein- und/oder Ausgabegeräts mit der Identifizierungs- und Lokalisierungseinrichtung (11,13) zur ständigen Identifizierung und/oder Lokalisierung gegeben ist, insbesondere bei einem mobilen Ein- und/oder Ausgabegerät welches zur Eingabe von Steuerungsbefehlen freigegeben ist.

14. Verfahren nach einem der Ansprüche 7 bis 13,
wobei vor der Ein- und/oder Ausgabe mit dem mobilen Ein- und/oder Ausgabegerät (10) ein Zusammenwirken des mobilen Ein- und/oder Ausgabegeräts mit der Identifizierungs- und Lokalisierungseinrichtung (11,13) zur Identifizierung und/oder Lokalisierung, insbesondere innerhalb einer bestimmten Zeitspanne erforderlich ist und/oder dass während der Ein- und/oder Ausgabe mit dem mobilen Ein- und/oder Ausgabegerät wiederholt eine Zusammenwirken des mobilen Ein- und/oder Ausgabegeräts mit der Identifizierungs- und Lokalisierungseinrichtung zur Identifizierung und/oder Lokalisierung, insbesondere innerhalb bestimmter Zeitintervalle erforderlich ist.

## Claims

1. A system controller, in particular for controlling conveyor systems (8,9), with at least one mobile input and/or output apparatus (10) and at least one control device (1,5) for controlling the system and for receiving and/or for transmitting signals from and/or to the mobile input and/or output apparatus, wherein a signal transmitting device (2,3,6,7) for transmitting signals between mobile input and/or output apparatus and control device is set up such that signals are transmitted at least partially wirelessly,
wherein
the system controller comprises a plurality of identification and location devices (11,13) which are set up such that they can interact with the mobile input and/or output apparatus in order to locate the position of the mobile input and/or output apparatus at the system and to identify the corresponding system area,
**characterised in that** the plurality of identification and location devices (11,13) comprise at least two different types of identification and location devices (11,13), wherein each type of identification and location device (11,13) carries out a different function of the mobile input and/or output apparatus,
wherein a first type of identification and location device (11) represents an operating point in which the mobile input and/or output apparatus enables control commands to be input, and a second type of identification and location device (13) represents a trigger point in which the mobile input and/or output apparatus enables information to be input.

2. The system controller according to claim 1,
wherein the identification and location device (11') comprises an emergency stop, or an emergency stop is arranged in the immediate vicinity of the identification and location device.

3. The system controller according to claim 1 or 2,
wherein the mobile input and/or output apparatus (10) is a touchscreen, a mobile telephone, a smartphone, a personal digital assistant or a tablet computer.

4. The system controller according to claim 1, 2 or 3,
wherein the signal transmitting device (2,3,6,7) comprises a wireless local network (3).

5. The system controller according to one of the preceding claims,
wherein the identification and location device (11,13) is a radio tag, a near field communication apparatus, a barcode or a two-dimensional code.

6. The system controller according to one of the preceding claims,
wherein the control device (1,5) is a central control device (1) for controlling the whole system and its components and/or a sub-control device (5) for controlling an area of the system and/or its components, wherein in particular the mobile input and/or output apparatus can receive signals from the central control device (1) and/or sub-control device (5) and/or transmit same to the central control device (1) and/or sub-control device (5).

7. A method for mobile system control, in particular for mobile control of conveyor systems (8,9), preferably for operating a system controller according to one of the preceding claims, wherein at least one mobile input and/or output apparatus (10) and at least one control device (1) are provided for controlling a system and for receiving and/or transmitting signals from and/or to the mobile input and/or output apparatus, wherein signals are transmitted between mobile input and/or output apparatus and control device at least partially wirelessly, wherein
furthermore, a plurality of identification and location devices (11,13) are provided, with the result that they can interact with the mobile input and/or output apparatus in order to locate the position of the mobile input and/or output apparatus at the system and to identify the corresponding system area,
**characterised in that** the plurality of identification and location devices (11,13) comprise at least two different types of identification and location devices (11,13), wherein each type of identification and location device (11,13) carries out a different function of the mobile input and/or output apparatus,
wherein a first type of identification and location device (11) represents an operating point in which the mobile input and/or output apparatus enables control commands to be input, and a second type of identification and location device (13) represents a trigger point in which the mobile input and/or output apparatus enables information to be input.

8. The method according to claim 7,
wherein an emergency switch off is provided such that it can be used by the operator of the mobile input and/or output apparatus independently of the mobile input and/or output apparatus during operation of the system with the mobile input and/or output apparatus.

9. The method according to claim 7 or 8,
wherein the mobile input and/or output apparatus detects an identification signal from the identification and location device (11,13) and transmits this to the control device, evaluated or unprocessed, with the result that the position of the mobile input and/or output apparatus can be detected and/or the corresponding system area can be identified by the control device.

10. The method according to claim 7, 8 or 9,
wherein the input and/or output of the input and/or output apparatus is enabled and/or restricted depending on the identified system area.

11. The method according to one of claims 7 to 10,
wherein a step to start communication between mobile input and/or output apparatus and control device takes place due to the interaction of mobile input and/or output apparatus and identification and location device.

12. The method according to one of claims 7 to 11,
wherein, after obtaining an identification signal from the identification and location device (11,13), the mobile input and/or output apparatus communicates directly with a control device for the local and identified system area.

13. The method according to one of claims 7 to 12,
wherein, during the input and/or output with the mobile input and/or output apparatus (10), a continuous interaction of the mobile input and/or output apparatus with the identification and location device (11,13) takes place for continuous identification and/or location, in particular with a mobile input and/or output apparatus for entering control commands.

14. The method according to one of claims 7 to 13,
wherein, before input and/or output with the mobile input and/or output apparatus (10), an interaction of the mobile input and/or output apparatus with the identification and location device (11,13) is required for identification and/or location, in particular within a specific timespan, and/or that, during the input and/or output with the mobile input and/or output apparatus, an interaction of the mobile input and/or output apparatus with the identification and location device for identification and/or location is repeatedly required, in particular within specific time intervals.

## Revendications

1. Commande d'installations, en particulier pour la commande d'installations de transport (8, 9), avec au moins un appareil mobile d'entrée et/ou de sortie (10) et au moins un dispositif de commande (1, 5) pour la commande de l'installation et pour la réception et/ou l'émission de signaux depuis et/ou vers l'appareil mobile d'entrée et/ou de sortie, un dispositif de transmission de signaux (2, 3, 6, 7) étant agencé pour la transmission de signaux entre l'appareil mobile d'entrée et/ou de sortie et le dispositif de commande de telle sorte que la transmission de signaux s'effectue au moins partiellement sans fil, dans lequel
le système de commande de l'installation comprend une pluralité de dispositifs d'identification et de localisation (11, 13) agencés de manière à être aptes à interagir avec l'appareil mobile d'entrée et/ou de sortie afin de localiser la position de l'appareil mobile d'entrée et/ou de sortie sur l'installation et d'identifier la zone correspondante de l'installation,
**caractérisé en ce que** la pluralité de dispositifs d'identification et de localisation (11, 13) comprend au moins deux types différents de dispositifs d'identification et de localisation (11, 13), chaque type de dispositif d'identification et de localisation (11, 13) mettant en oeuvre une fonction différente de l'appareil mobile d'entrée et/ou de sortie,
un premier type de dispositif d'identification et de localisation (11) constituant un point d'opération au niveau duquel l'appareil mobile d'entrée et/ou de sortie permet une entrée d'instructions de commande, et un deuxième type de dispositif d'identification et de localisation (13) constituant un point de déclenchement au niveau duquel l'appareil mobile d'entrée et/ou de sortie permet une entrée d'informations.

2. Commande d'installations selon la revendication 1,
dans lequel le dispositif d'identification et de localisation (11') comprend un interrupteur d'arrêt d'urgence, ou un interrupteur d'arrêt d'urgence est disposé à proximité immédiate du dispositif d'identification et de localisation.

3. Commande d'installations selon la revendication 1 ou la revendication 2,
dans lequel l'appareil mobile d'entrée et/ou de sortie (10) est un écran tactile, un téléphone mobile, un smartphone, un assistant numérique personnel ou une tablette.

4. Commande d'installations selon la revendication 1, 2 ou 3,
dans lequel le dispositif de transmission de signaux (2, 3, 6, 7) comprend un réseau local sans fil (3).

5. Commande d'installations selon l'une des revendications précédentes,
dans lequel le dispositif d'identification et de localisation (11, 13) est une radio-étiquette, un dispositif de communication en champ proche, un code à barres ou un code bidimensionnel.

6. Commande d'installations selon l'une quelconque des revendications précédentes,
dans lequel le dispositif de commande (1, 5) est un dispositif de commande central (1) pour la commande de l'ensemble de l'installation et de ses composants et/ou un dispositif de commande secondaire (5) pour la commande d'une zone de l'installation et/ou de ses composants, l'appareil mobile d'entrée et/ou de sortie étant notamment apte à recevoir des signaux du dispositif de commande central (1) et/ou du dispositif de commande secondaire (5) et/ou à les envoyer au dispositif de commande central (1) et/ou au dispositif de commande secondaire (5).

7. Procédé de commande mobile d'installations, en particulier de commande mobile d'installations de transport (8, 9), de préférence pour l'exploitation d'une commande d'installations selon l'une des revendications précédentes, dans lequel au moins un appareil mobile d'entrée et/ou de sortie (10) et au moins un dispositif de commande (1) sont mis à disposition pour la commande d'une installation et pour la réception et/ou l'émission de signaux depuis et/ou vers l'appareil mobile d'entrée et/ou de sortie, une transmission de signaux entre l'appareil mobile d'entrée et/ou de sortie et le dispositif de commande s'effectuant au moins partiellement sans fil, dans lequel
une pluralité de dispositifs d'identification et de localisation (11, 13) sont en outre prévus de manière à être aptes à interagir avec l'appareil mobile d'entrée et/ou de sortie afin de localiser la position de l'appareil mobile d'entrée et/ou de sortie sur l'installation et d'identifier la zone correspondante de l'installation,
**caractérisé en ce que** la pluralité de dispositifs d'identification et de localisation (11, 13) comprend au moins deux types différents de dispositifs d'identification et de localisation (11, 13), chaque type de dispositif d'identification et de localisation (11, 13) mettant en oeuvre une fonction différente de l'appareil mobile d'entrée et/ou de sortie,
un premier type de dispositif d'identification et de localisation (11) constituant un point d'opération au niveau duquel l'appareil mobile d'entrée et/ou de sortie permet une entrée d'instructions de commande, et un deuxième type de dispositif d'identification et de localisation (13) constitue un point de déclenchement au niveau duquel l'appareil mobile d'entrée et/ou de sortie permet une entrée d'informations.

8. Procédé selon la revendication 7,
dans lequel un arrêt d'urgence est prévu de telle sorte qu'il peut être mis en oeuvre par l'opérateur de l'appareil mobile d'entrée et/ou de sortie indépendamment de l'appareil mobile d'entrée et/ou de sortie pendant l'utilisation de l'installation avec l'appareil mobile d'entrée et/ou de sortie.

9. Procédé selon la revendication 7 ou la revendication 8,
dans lequel l'appareil mobile d'entrée et/ou de sortie détecte un signal d'identification provenant du dispositif d'identification et de localisation (11, 13) et le transmet évalué ou non traité au dispositif de commande, de sorte que la position de l'appareil mobile d'entrée et/ou de sortie peut être détectée par le dispositif de commande et/ou la zone correspondante de l'installation peut être identifiée.

10. Procédé selon la revendication 7, 8 ou 9,
dans lequel, en fonction de la zone d'installation identifiée, une entrée et/ou une sortie par le dispositif d'entrée et/ou de sortie est autorisée et/ou limitée.

11. Procédé selon l'une des revendications 7 à 10,
dans lequel, grâce à l'interaction entre l'appareil mobile d'entrée et/ou de sortie et le dispositif d'identification et de localisation, une étape de démarrage de la communication entre l'appareil mobile d'entrée et/ou de sortie et le dispositif de commande est effectuée.

12. Procédé selon l'une des revendications 7 à 11,
dans lequel l'appareil mobile d'entrée et/ou de sortie communique directement avec un dispositif de commande de la zone locale et identifiée de l'installation après avoir reçu un signal d'identification du dispositif d'identification et de localisation (11, 13).

13. Procédé selon l'une quelconque des revendications 7 à 12,
dans lequel, pendant une entrée et/ou une sortie au moyen de l'appareil mobile d'entrée et/ou de sortie (10), il y a une interaction permanente entre l'appareil mobile d'entrée et/ou de sortie et le dispositif d'identification et de localisation (11, 13) pour une identification et/ou une localisation permanente, en particulier dans le cas d'un appareil mobile d'entrée et/ou de sortie qui est autorisé à entrer des instructions de commande.

14. Procédé selon l'une des revendications 7 à 13,
dans lequel, avant une entrée et/ou une sortie au moyen de l'appareil mobile d'entrée et/ou de sortie (10), une interaction de l'appareil mobile d'entrée et/ou de sortie avec le dispositif d'identification et de localisation (11, 13) est nécessaire pour l'identification et/ou la localisation, en particulier dans un intervalle de temps déterminé, et/ou en ce que, pendant une entrée et/ou une sortie au moyen de l'appareil mobile d'entrée et/ou de sortie, une interaction de l'appareil mobile d'entrée et/ou de sortie avec le dispositif d'identification et de localisation est nécessaire de manière répétée pour l'identification et/ou la localisation, en particulier dans des intervalles de temps déterminés.
